# EUROPEAN PATENT APPLICATION

(11) **EP 1 513 091 A1**
(43) Date of publication of application: **09.03.2005**
(21) Application number: 04255343.8
(22) Date of filing: 03.09.2004
(51) Int. Cl.: G06F 17/60

(54) **Data management apparatus, data management method and program thereof**

(30) Priority: 05.09.2003 JP 2003313961; 09.02.2004 JP 2004031550
(71) Applicant: MATSUSHITA ELECTRIC INDUSTRIAL CO., LTD., Kadoma-shi, Osaka 571-8501 (JP)
(72) Inventor: Tanaka, Mitsuru, Katano-shi Osaka 576-0052 (JP); Inagaki, Yuichi, Hirakata-shi Osaka 573-0164 (JP)
(74) Representative: Wallin, Nicholas James

(57) **Abstract**

This invention is a data-management apparatus, data-management method and program thereof that improve convenience for a user that does not have authorization to access data without sacrificing the security of the data. This invention is a data-management apparatus, data-management method and program thereof that comprises a user-information-provider unit that provides information to the user about other users that are authorized to access data when the user is not authorized to access data.

## Description

### Technical Field

This invention relates to a data-management apparatus, data-management method and program thereof.

### Background to the Invention and Prior Art

Conventionally, it has been normal for many people to be in charge in dealing with the progress of work at a company. For example, after one person in charge completes one specified job, the work is handed over to the next person in charge, and this procedure is repeated over and over again until the entire work is completed. It is also possible for work to comprise many smaller jobs.

As a way of managing the progress of this kind of work, work-flow systems have been employed that operate using a data-management apparatus. The work flow referred to here can be defined as a series of jobs performed in order by a plurality of users. A work-flow system that is used in work authorization or the like may also be called group ware. For example, in the case of work in which approval must be obtained from higher up, authorization can be obtained by using a computer network to circulate an authorization form the general employee to manager, section manager, department manager, all the way up to the president. And if there is no problem in circulation, it will perform as work. Moreover, when managing the work progress, each person in charge performs the job that they are given and have responsibility for, and when handing the work over to the next person in charge, they enter the progress status into the work-flow system indicating that their part of the work is complete. By entering this information, the next person in charge can then start their job and it is possible to manage the progress status of the overall work.

In the work-flow system described above, in order to perform work such as approval and progress management, there are cases where it is necessary to view data related to that work. For example, this related data could include estimates that are required for approving the settlement of accounts, or the progress status of a separate job that is necessary for performing progress management. When performing work in the work-flow system, it is possible to view this related data on a screen and to reference the related data as attached documents.

Normally, security is not performed independently for this kind of data (documents), so when a user of the work-flow system clears verification for using the work-flow system, it becomes possible for that user to access related data (documents) for all work flows that the user is personally concerned with.

However, in this kind of operation, when a user registers as a person in charge of a process in the work flow, it becomes possible for that user to view documents that originally the user was not authorized to see. For example, when a work flow is related to a non-disclosure agreement (NDA) with a client and confidential documents related to the work flow are supplied, a problem occurs in that it becomes possible for all the people in charge of each job in the work flow to view those confidential documents.

In order to solve this problem, it is desired that security be performed independently for the data (documents). For example, even within the same company, stronger security should be performed for documents that are to be disclosed only to a person higher up that has special authorization, or for documents related to a non-disclosure agreement with a client. There are various forms of security which may be used in the case where an unauthorized person tries to access materials. For example, there is security that prevents the person from viewing the materials, or prevents the person from actually accessing the materials (i.e. : prevents the person from knowing that the documents exist), etc.

An example security management method which may be used in the above context is described in Japanese unexamined patent publication No.10-232811, wherein it is described that access rights for data in a database may be finely set by a security information table. In use an AP inquires whether a specified user may access particular data, and information relating to the range of the accessible database is passed to the AP. The AP then requests retrieval to a database server in the range of the accessible database.

However, the following problems occur when strong security is employed for the materials themselves. That is, in the case where a person in charge of a job in the work flow is unable to reference the attached materials, it may not be possible for that person to give approval based on those materials, or to perform the necessary input for managing the progression of the work. Moreover, when viewing the materials, procedures must be taken such as the user obtaining authorization from the administrator of the data-management apparatus to view the materials. However, in a large-scale system, it is unrealistic for the administrator to have to change those kinds of settings for each work. Furthermore, in most cases the administrator is not sufficiently capable of determining whether or not it is allowable to disclose data to a user, so a problem occurs in that security is decreased when authorization is easily given for all disclosure requests.

Also, instead of relying on an administrator to change the security settings, there is a possibility that a user will have another user who is authorized to view the materials show him/her the materials. However, when there are a large number of people who use the system, a further problem occurs in that it is necessary to ask the administrator after all for information such as who has authorization to view the materials.

As discussed above, therefore, there are opposing problems of how to strengthen security and at the same time improve the efficiency of the work-flow system. The present invention aims to address at least some of these problems.

In view of the above, the present invention provides a data-management apparatus, data-management method, program thereof and corresponding computer-readable storage medium storing the program, that improve convenience for users who do not have authorization to reference data without sacrificing the safety of the data.

In order to accomplish the object of the invention, the following units are employed. In other words, this invention is a data-management apparatus that stores data to be accessed, and determines whether or not a user has authorization to access the data. The invention comprises a user-information-provider unit that provides information to the user about other users that are authorized to access data when the user does not have authorization to access data.

As a means for providing information about other users, an access-authorization-memory unit correlates and stores data identifiers that are capable of identifying data, and access-authorized-user identifiers that are capable of identifying users that can access the data; an access-analysis unit obtains the user identifier for a user performing an access request and a data identifier for the data that is the target of that access from the access request; and an access-authorized-user-acquisition unit obtains the corresponding access-authorized-user identifier from the access-authorization-memory unit based on the data identifier obtained by the access-analysis unit. Next, an access-authorization-judgment unit compares the user identifier obtained by the access-analysis unit with the access-authorized-user identifier obtained by the access-authorized-user-acquisition unit; and a user-information-provider unit provides information about other users that are authorized to access the data for which the user performed an access request when it was determined by the access-authorization-judgment unit that access of the data is not authorized.

By providing information to the user about other users that are authorized to access data when the user is not authorized to access data, it is possible even for a user that is not authorized to reference (access) data to obtain information about users that are authorized to access that data without having to ask the administrator. Therefore, the user is able to perform judgment of following processes when the user does not have access authorization, and as a result, it is possible to improve convenience of the data-management apparatus.

Also, the data-management apparatus may be constructed such that it comprises a work-flow-control unit that controls the work flow; and where the user-information-provider unit provides information about another user that is authorized to access data at least such as whether or not that other user is authorized to change the access authorization for that data, or whether or not that other user is authorized to perform a process in the work flow in place of the user. In this case, the data to be accessed is data that is provided to be used by a plurality of users in the work-flow system.

In other words by applying this data-management apparatus to a work-flow system, the display of information about another user is applied to operations such as requesting the other user to perform processing such as authorization for the work-flow system, or obtaining authorization from the other user to access data, and it is very effective in making it possible for the work-flow processes to flow more smoothly.

Furthermore, in addition to the access-authorization-memory unit, the data-management apparatus comprises a work-flow-user-memory unit that stores work-flow users that are authorized to use the work flow, and where, based on the work-flow-user-memory unit, the work-flow-control unit determines independently whether or not a user is authorized to use the work flow and whether or not a user is authorized to access data.

In this case, in addition to verification for the work-flow system itself, it is possible to set security independently for the data separate from the work flow, so it is possible to maintain security for the data itself without depending on the work flow.

The information about other users that are authorized to access data can be such that it includes at least whether or not the other user has authorization to change the data access authorization, or whether or not the other user has authorization to perform substitute processing in the work flow.

Moreover, the data-management apparatus may be constructed such that it comprises an access-authorization-change-request unit that, based on information about another user that is selected by the user, notifies the user corresponding to that information of a request to change the access authorization.

With this construction, not only does the work-flow processing function smoothly, but changing the access authorization is determined by a person in charge who is sufficiently capable of determining whether to change the access authorization, so together with spreading out the human load when changing the access authorization, it is possible to keep security strong.

The access-authorization-change-request unit can also be constructed so that it changes the authorization to access data based on processing by the other user in response to the request notification.

Furthermore, the data-management apparatus may be constructed such that it comprises a substitute-processing-request unit that, based on information about another user selected by the user, sends a request to said another user that corresponds to that information to perform a process in the work flow in the place of the user that is supposed to perform the process.

In the above processing as well, it is similarly possible for the work-flow processing to function smoothly without having to change the security for a document itself, so it is possible to maintain enough security.

The data-management apparatus and work-flow system described above can be embodied using a computer. In that case, each of the unit, except for the memory unit, is embodied by operating a program on the computer.

### [Effect of the Invention]

With the data-management apparatus and data-management method of this invention, by providing information to the user about other users that are authorized to access data when the user does not have authorization to access data, it is possible even for a user that does not have authorization to reference (access) data to acquire information about users that are authorized to access that data without having to ask the system administrator. Therefore, the user can make a judgment at that time about following processes for which access is not authorized, and as a result, it is possible to improve convenience of the data-management apparatus. Also, the access authorization for accessing data is separate from the authorization for the work flow, so it is not possible to reference data simply by registering into the work flow, and therefore it is possible to have even stronger security. Moreover, it is possible to acquire information about users that have access authorization, so convenience of the work flow is not lost even when strong security is employed.
Fig. 1 is a block diagram showing the functions of the user terminal, data-management apparatus and DB server of a work-flow system.
Fig. 2 is drawing showing outline of the construction of the data-management apparatus.
Fig. 3 is a drawing showing the construction of the work-flow system.
Fig. 4 is a drawing showing an example of the user-identifier table.
Fig. 5 is a drawing showing an example of the access-authorization table and data table.
Fig. 6 is a flowchart showing outline of the process for determining whether or not accessing data of the work-flow system is authorized.
Fig. 7 is a drawing showing an example of the display showing the access-authorized-user information.
Fig. 8 is a drawing showing examples of the work-flow table, person-in-charge-setting table, and work-flow-status table.
Fig. 9 is a drawing showing an example of a work-flow list.
Fig. 10 is a drawing showing an example of the request-registration screen.
Fig. 11 is a drawing showing an example of the user-verification table.
Fig. 12 is a flowchart showing outline of the request process.
Fig. 13 is a flowchart showing outline of the creation of a work-flow list for each user.
Fig. 14 is drawing showing an example of a confidential document.

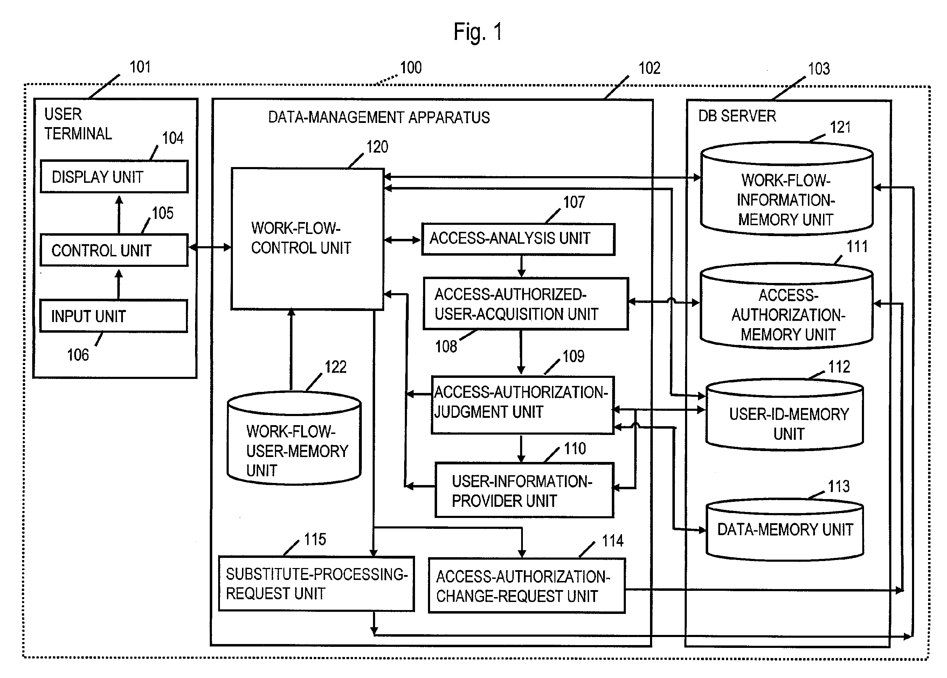

To provide a better understanding of the invention, the preferred embodiments of the invention will be explained below with reference to the supplied drawings. The embodiments described below are detailed examples of the invention, however they do not limit the technical scope of the invention. Also, as shown in Fig. 1, the work-flow system 100 is constructed by connecting the data-management apparatus 102 of this invention to the user terminal 101 and DB (database) server 103 so that they can communicate with each other. However, the data-management apparatus 102 and DB server 103 can be located in the same computer.

### (Embodiments)

Processing by the work-flow system of an embodiment of the invention will be explained below.

Fig. 1 is a block diagram showing the functions of the user terminal 101, data-management apparatus 102 and DB server 103 of the work-flow system 100. The processing by each unit will be described later.

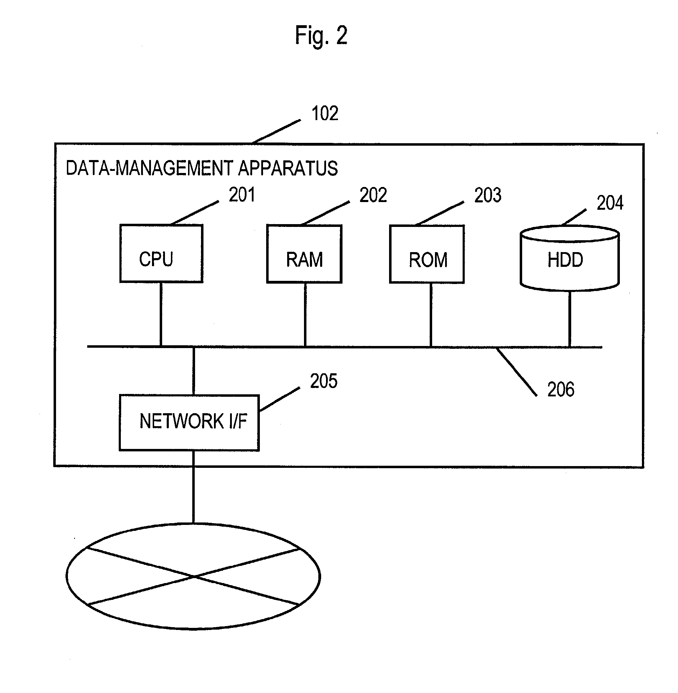

Also, Fig. 2 is a drawing showing outline of the construction of the data-management apparatus 102, where the CPU (Central Processing Unit) 201, RAM (Random Access Memory) 202, ROM (Read Only Memory) 203, HDD 204 and network I/F (interface) 205 are connected by way of an internal bus 206. The CPU 201 uses the RAM 202 as a work area, and by executing a program that is stored in ROM 203 or HDD 204, it operates as each of the units shown in Fig. 1. The network I/F 205 is connected to a network, and it can send data to or receive data from other devices. Also, the construction of the user terminal 101 and DB server 103 are the same as that of the data-management apparatus 102, and since the stored program is different, it is possible to execute different processes.

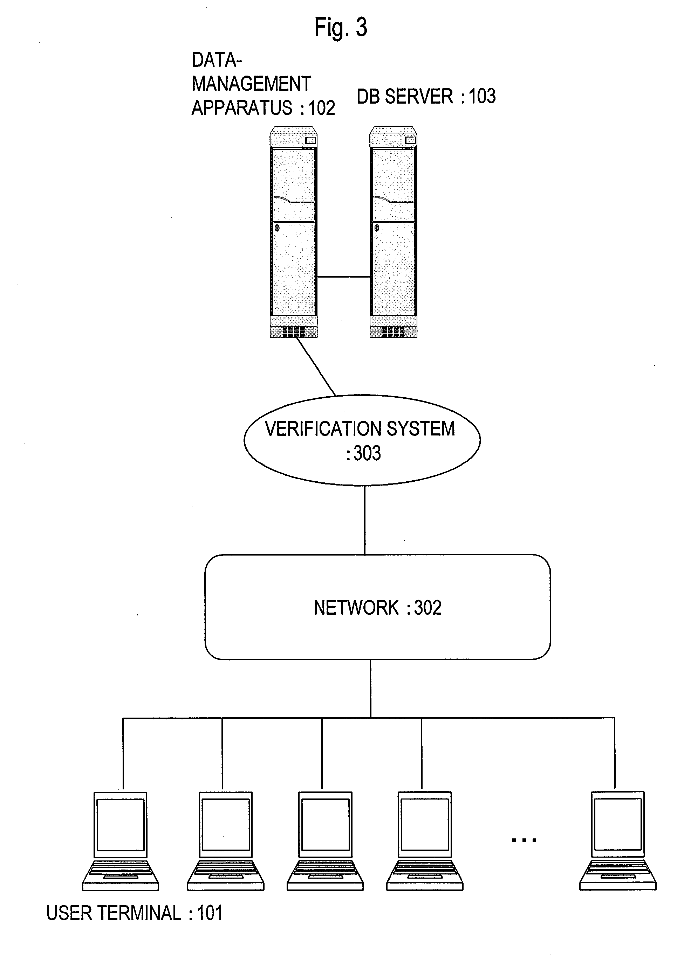

Fig. 3 is an example of the construction of the work-flow system 100, where a plurality of user terminals 101 are connected to the data-management apparatus 102 and DB server 103 by way of a network such as the Internet or Intranet such that they can communicate with each other. Moreover, in the early stage of communication between the user terminal 101 and the data-management apparatus 102, a verification system 303, for example, performs verification of the user (person in charge) using the user terminal 101. In the case of using a work-flow system that will be described later, user verification is performed by a work-flow-control unit 120 (described later) instead of the verification system 303.

Next, the processing by the work-flow system 100 will be explained.

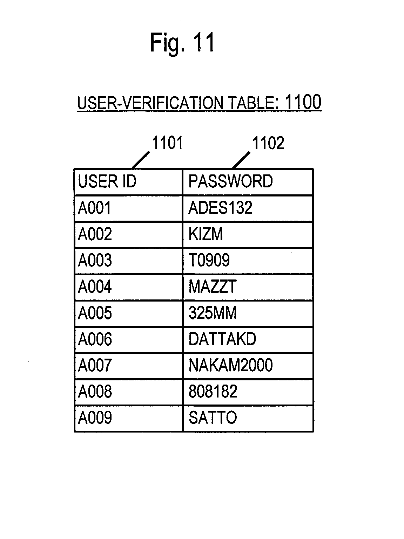

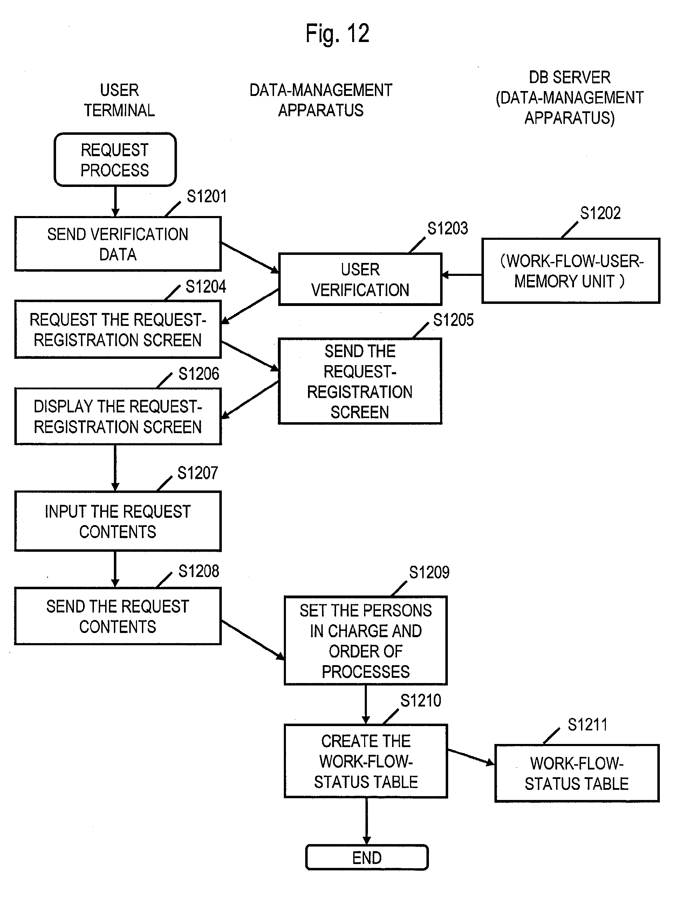

For example, in the case where a user wants to request that sample parts be shipped to a client whom the user takes charge of, first, that user logs in to the work-flow system 100. In other words, first, the user uses the user terminal 101 to access the work-flow-control unit 120, and receives the user-verification screen that is sent from the work-flow-control unit 120. The user then uses the input unit 106 to enter a user ID and password, which are user identifiers for identifying the user, in the user-verification screen, and sends that information to the work-flow-control unit 120 (Fig. 12: S1201). The input unit referred to here could be a keyboard, a pointing device, or the like. After the work-flow-control unit 120 receives the entered user ID and password, it performs verification by determining whether or not the user ID and password match respective items stored in the user-verification table (Fig. 12: S1202 to S1203). Fig. 11 shows an example of a user-verification table that is stored in the work-flow-user-information-memory unit 122. The user ID 1101 and password 1102 for users that are authorized to use the work-flow system are correlated and stored in the user-verification table 1100. The entered user ID and password are judged to determine whether or not they match a user ID 1101 and password 1102 in the user-verification table, and when they match, the user is verified.

After the user has been verified, by performing specified controls by way of an input unit 106, those controls are sent to the data-management apparatus 102 via a control unit 105 and processed by a work-flow-control unit 120 that is operated by the data-management apparatus. In other words, it is possible for the user that logged into the work-flow system 100 to call up work that the user is personally concerned with from among the work registered in the work-flow system 100 by way of the work-flow-control unit 120 and then perform processing, or it is possible to register a new work flow.

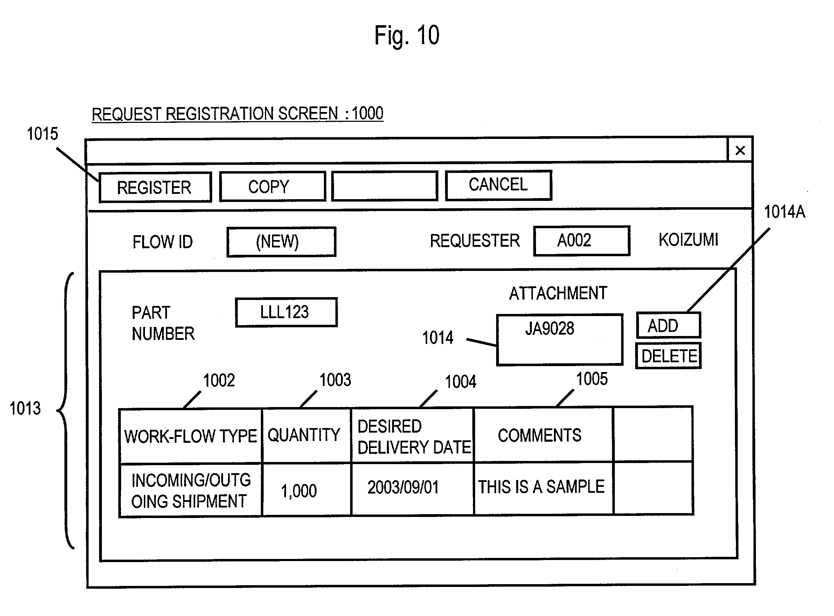

When a user desires to request that sample parts be shipped to a client whom the user takes charge of, the user calls up the request- registration screen 1000, which is one of the screens of the groupware being operated by the work-flow system 100 (Fig. 12: S1204 to S1205 to S1206). Fig. 10 shows an example of the request-registration screen for registering request contents into the work-flow system of an embodiment of this invention.

By entering the required data for making a request into the input fields of the request-input area on the request-registration screen 1000, the user is able to register a request in the work-flow system to ship sample parts (Fig. 12: S1207).

In Fig. 10, the part number 'LLL123' of the sample is entered for the part number 1001, 'Incoming/Outgoing Shipment' is entered for the work-flow type 1002, '1000' is entered for the quantity 1003, '2003/9/1' is entered as the desired delivery date 1004, and 'This is a Sample' is entered as a comment 1005. The work-flow types are types that are separated according to purpose of the work flow, and for example, in the case of a work flow for handling incoming shipments or outgoing shipments, 'Incoming/Outgoing Shipment' is selected as the type, and in the case of a work flow related to the delivery of technical documents, 'Technical Documents' is selected as the type.

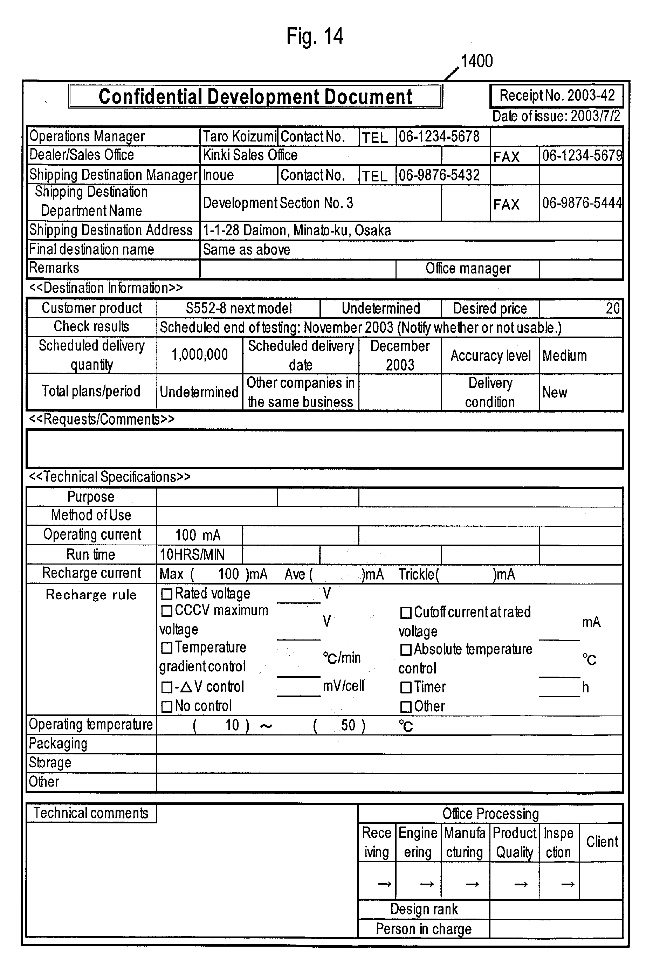

Also, it is possible to attach documents that are necessary for the incoming or outgoing shipment of sample parts in the attached documents field 1014. For example, by pressing the 'Add' button 1014A, the search screen stored in the work-flow system 100 is displayed (not shown in the figure), and by selecting a specified file, it is possible to attach that data as a document. An ID for the attached document is displayed on the request-registration screen 1000. In Fig. 10, 'JA9028' is displayed as the ID, and the attached document is a development document for a new product to be tested by the client that uses the sample part 'LLL123', and it is handled as a confidential document. An example of the confidential documents described above is shown in Fig. 14 as confidential development document 1400. These confidential documents are generally very important documents, and even users within the same company or users sharing work in the same work flow may not always have authorization to view them.

After the user enters the contents for the request, an instruction to register the request contents is sent to the work-flow-control unit 120 by pressing the 'register' button 1015 (Fig. 12: S1208).

After the work-flow-control unit 120 receives the request contents, it stores the request contents in the work-flow-memory unit 121.

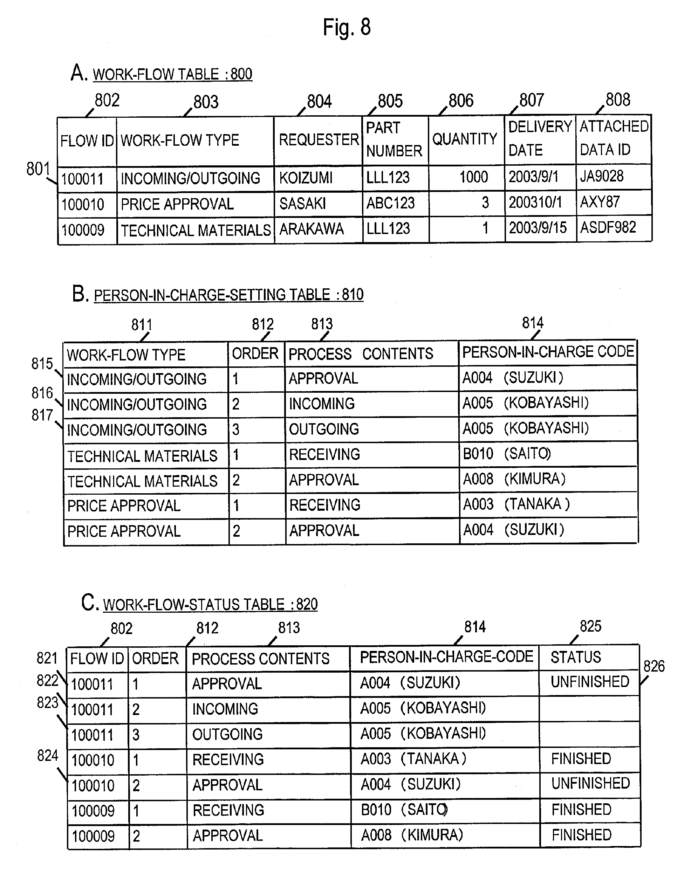

Next, Fig. 8 will be used to explain the processing of the requested contents by the work-flow-control unit 120.

After the work-flow-control unit 120 receives the request contents shown in Fig. 10, it assigns an identifiable flow ID to the request contents and registers a record 801 in the work-flow table 800 shown in Fig. 8A. Here, the flow ID 802 is '100011' . Moreover, of the request contents, the work-flow type 'Incoming/Outgoing Shipment', requester's name 'Koizumi', part number LLL123' , quantity '1000', delivery date '2003/9/1', and attached document ' JA9028' are entered as the work-flow type 803, requester's name 804, part number 805, quantity 806, delivery date 807, and attached data ID 808, respectively. The items shown in Fig. 8A are part of record 801, and in addition to these items, items such as the client's name, shipping destination, and the like that are necessary by another user when executing the request are included. Also, the work-flow table 800 is stored in the work-flow-information-memory unit 121.

Next, the work-flow-control unit 120 sets the order of processes and the person in charge of each process based on the person-in-charge-setting table 810 shown in Fig. 8B, and creates a work-flow-status table 820 (Fig. 12: S1209 to S1210). Here, Fig. 8B shows an example of the person-in-charge-setting table of an embodiment of this invention that is stored in the work-flow-information-memory unit 121, and Fig. 8C is an example of the work-flow-status table of an embodiment of this invention that is stored in the work-flow-information-memory unit 121. The person-in-charge-setting table 810 gives the correlation between the order of each process and the persons in charge of those processes for each work-flow type.

That is, based on 'Incoming/Outgoing Shipment' that corresponds to the work-flow type 830, three records 815 to 817 are obtained from the work-flow type 811 in the person-in-charge-setting table 810. The order of processing is then set based on those records such that, first, when the order 812 is '1', 'Suzuki', who corresponds to the code for the person in charge 814, performs 'Authorization' of the process contents 813, then when the order 812 is '2', 'Kobayashi' performs the 'Incoming Shipment' and 'Outgoing Shipment' processes. In other words, the requester can register a request without being aware of whom the persons in charge are, and the persons in charge are set automatically based on the registered request contents.

Records 821 to 823 are registered (stored) in the work-flow-status table 820 based on the order of the three processes and the persons in change that are set (Fig. 12: S1211 ) . The aforementioned flow ID 802, order 812, process contents 813, person-in-charge code 814 and further status 825 are added to these records 821 to 823. The status 825 is managed such that 'Finished' is entered for the processes that are finished, 'Unfinished' is entered for the process to be performed next, and other processes are kept blank.

Next, the processing of the jobs in a request registered in this way will be explained.

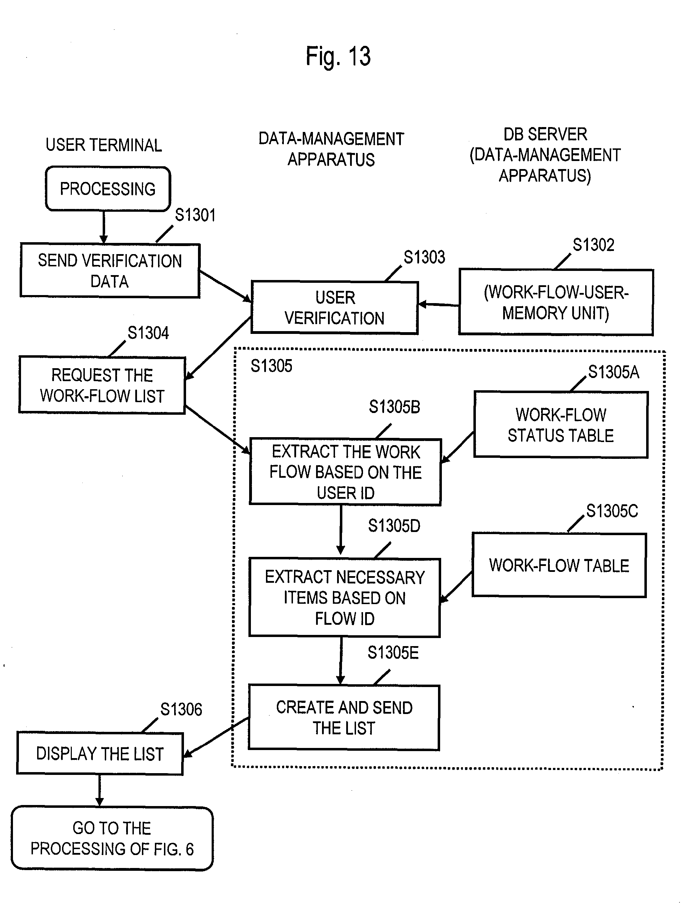

For example, a different user logs in to the work-flow system 100 to execute a process that he/she takes charge of. In other words, as described above, the user uses the user terminal 101 to access the work-flow-control unit 120, and by entering a user ID and password or the like, the work-flow-control unit 120 verifies the user (Fig. 13: S1301 to S1302 to S1303).

Next, when the user uses the user terminal 101 to enter an instruction to call up a process that he/she takes charge of from among the processes registered in the groupware, the contents of that instruction are sent to the data-management apparatus 102 via the control unit 105 (Fig. 13: S1304), and the work-flow-control unit 120 processes the contents of that instruction to create a list of work flows related to that user (Fig. 13: S1305).

The created list is sent to the user terminal 101 and displayed on the display unit 104 such as a display via the control unit 105 (Fig. 13: 1306). By performing verification for the work-flow system, the user is then able to view the work flow for which he/she is concerned with in this way.

An example of processing up to the point where the work-flow list is created (steps S1303 to S1306) will be given below.

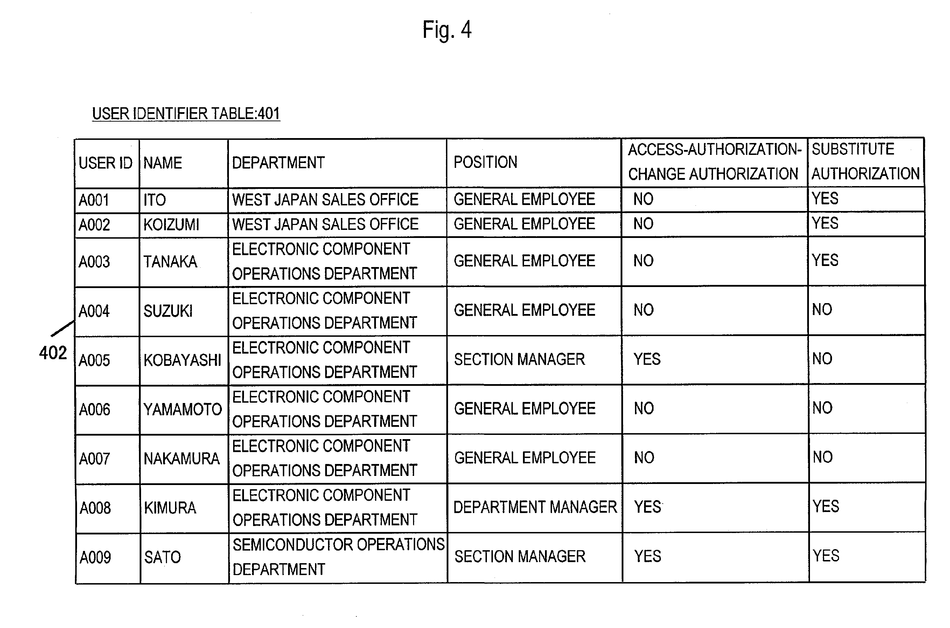

First, after the user has been verified by the verification system 303, the verified user ID is given to the work-flow-control unit 120. Here the user ID is taken to be 'A004', or in other words 'Suzuki' (according to the user-identifier table 401 in Fig. 4, to be described later). Based on the user ID 'A004', the work-flow-control unit 120 extracts the work flows that contain the process that user ID 'A004' (Suzuki) is in charge of from the work-flow-status table 820 stored in the work-flow-information-memory unit 121 (Fig. 13: S1305A to S1305B).

When extracting the work flows that contain the processes that user ID 'A004' (Suzuki) is in charge of from the work-flow-status table 820 shown in Fig. 8C, first, the records for when the person-in-charge code 814 is 'A004' , and the status 825 is 'Unfinished' are extracted. In Fig. 8C this corresponds to record 821 and record 824.

Then, based on the flow ID 802 of the extracted records 821, 824, the work-flow-control unit 120 further searches the work-flow table 800 and extracts the requester 804, part number 805, quantity 806, delivery date 807, and attached-data ID 808, etc. that are related to those records (Fig. 13: S1305C to S1305D) .

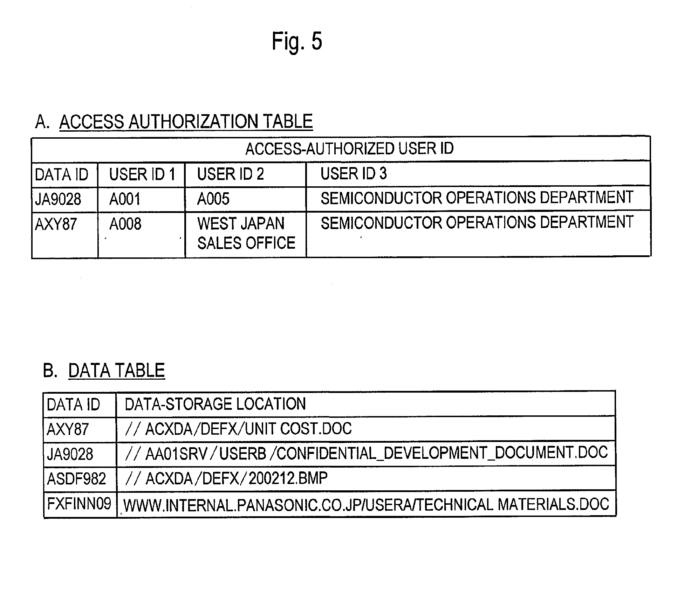

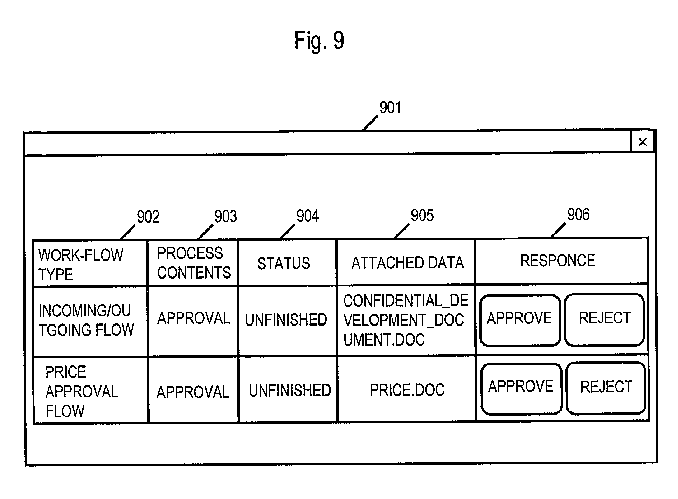

The extracted records, for example as shown in Fig. 9, are created like the work-flow list 901 such that they can be viewed on the user terminal 101 (Fig. 13: S1305E, create). Here, the work-flow type 902, process contents 903, status 904, attached data 905, and response 906 are displayed in the work-flow list 901. The work-flow type 902 indicates what kind of flow the work flow is. The process contents 903 indicate the processes in the work flow to be performed by the person in charge (user), for example, it can include 'Approval', Receiving' , 'Incoming Shipment', 'Outgoing Shipment' or the like. The status of the process performed by the user is given in the status 904. The attached data 905 displays the name of the attached data based on the attached data ID shown in Fig. 8, and data table (Fig. 5B) to be described later. Also, for the response 906, input buttons that correspond to the process contents 903 are displayed for the user to input a response. In this example, an 'Approve' button and 'Reject' button are displayed in correspondence to the process contents 'Approval'.

After the work-flow list 901 has been created, that work-flow list 901 is sent from the work-flow-control unit 120 to the control unit 105, and displayed by the display unit 104 (Fig. 13: S1305E-send to S1306).

The process described above for displaying a list of work flows related to the user is just an example, and the process contents and display contents can differ according to the work-flow system.

Next, by pressing the button for the response 906 for a specified work flow from among a plurality of displayed work flows, the user is able to approve or reject the process contents. When approving or rejecting the contents, the user may have to access various attached data in order for approval. In that case, by selecting to display the attached data 905, the user can view that data if access is authorized.

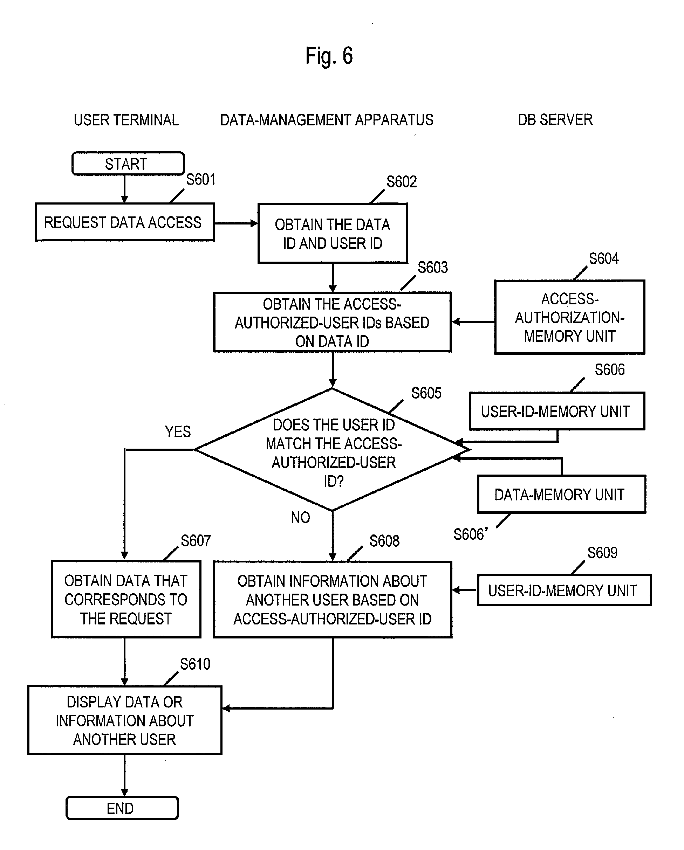

Next, the process for determining whether or not access is authorized will be explained with reference to the outline of the processing flow shown in Fig. 6.

When the user selects the display using the input unit 106, the selection is received as an access request by the access-analysis unit 107 of the data-management apparatus 102 via the control unit 105 (Fig. 6: S601). The access request contains the data ID, which is a data identifier for identifying the data, and a user ID that was used in the user verification process.

Next, the access-analysis unit 107 that received the access request, acquires the data ID and user ID, and sends them to the access-authorized-user-acquisition unit 108 (Fig. 6: S602) . In this example, the user pressed the button to display the attached data, 'confidential_development_document.doc'. In this case, the data ID is 'JA9028'.

After the access-authorized-user-acquisition unit 108 acquires the data ID and user ID, by sending the data ID 'JA9028' to the DB server 103, it acquires the corresponding access-authorized-user IDs from the access-authorization-memory unit 111 of the DB server 103 (Fig. 6: S603 to S604). The access-authorized-user IDs referred to here are user identifiers that are capable of accessing data corresponding to the data ID. The search by the DB server 103 is a process that references the access-authorization table such as shown in Fig. 5A, and extracts the access-authorized-user IDs 'A001', 'A005' and 'Semiconductor Operations Department' based on the data ID 'JA9028'. The acquired access-authorized-user IDs ('A001', 'A005' and 'Semiconductor Operations Department') are sent to the access-authorization-judgment unit 109.

Next, the access-authorization-judgment unit 109 that received the access-authorized-user IDs compares those access-authorized-user IDs with the user ID that was similarly sent from the access-authorized-user-acquisition unit 108 (Fig. 6: S605). That is, it compares the access-authorized-user IDs 'A001', 'A005' and 'Semiconductor Operations Department' with the user ID 'A004'. In this embodiment, operations departments are included in the access-authorized-user IDs. Many users are included in an operation department, and here, since the operations department is the 'Semiconductor Operations Department', all of the users belonging to the 'Semiconductor Operations Department' are access-authorized users. In other words, an operations department is a user ID that can comprise a plurality of user IDs, and is treated the same as a user ID (access-authorized-user ID).

Here, the user ID 'A004' does not match any of the access-authorized-user IDs, and by further searching the user-identifier table 401 (see Fig. 4) that is stored in the user-ID-memory unit 112, it is determined that the user ID 'A004' (402) does not belong to the 'Semiconductor Operations Department' (it belongs to the electronic component operations department) (Fig. 6: S605 to S606 to S606 NO).

When the access-authorization-judgment unit 109 determines that the user ID does not match any of the access-authorized-user IDs, it means that the user corresponding to that user ID is not authorized to access the data that was requested to be accessed by the access request. When access is not authorized, the user-information-provider unit 110 acquires information about other users acquired from the access-authorization-memory unit 111, or in other words, information about access-authorized-user IDs 'A001', 'A005' and 'Semiconductor Operations Department' from the user-ID-memory unit 112 or access-authorization-memory unit 111 and sends it to the user terminal 101 (Fig. 6: S608 to S609) . Here it is presumed that the information about other users is stored in the user-identifier table of the user-ID-memory unit 112.

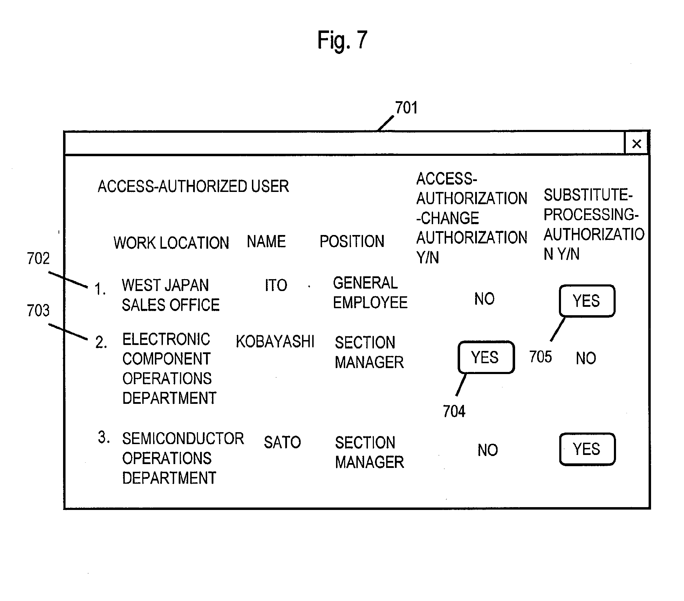

The control unit 105 that acquires the information about other users displays that information on the display unit 104 as the 'Access-authorized Users' display 701 shown in Fig. 7 (Fig. 6: S610).

As described above, in the case where the user is not able to access data, by providing that user with information about other users that are authorized to access the data, it is possible to acquire information about users that have authorization to access data without having to make an inquiry to the system administrator. Therefore, even when the user does not have access authorization, the user can determine a process which should be carried out from now on at that time, and as a result it is possible to improve the convenience of the data-management apparatus. Moreover, the display of information about other users is applied to operations such as making requests to other users to perform processing in the work-flow system such as approval, or obtaining authorization from other users to access data, and thus it is possible for the work-flow processing to flow more smoothly. Furthermore, since authorization for using a work flow is performed independently from determining whether or not there is authorization for accessing documents (data) referenced from the work flow, it is possible to perform strong security for the data itself. Therefore, it is possible to perform the work flow processing smoothly without sacrificing security of the data.

It is preferred that the information about other users referred to above be information that is effective in making processing in the work-flow system flow smoothly, such as name of the user, name of the department the user belongs to, position of the user, whether or not the user has authorization to make changes in access authorization, whether or not the user has substitute authorization for processing on the work-flow system, etc.

Now, when the access-authorization-judgment unit 109 determines that the user ID matches one of the access-authorized-user IDs, it means that the user corresponding to that user ID has authorization to access the data requested by the access request. In this case, the access-authorization-judgment unit 109 acquires the data storage location by referencing the data table in the data-memory unit 113 such as shown in Fig. 5B, and as a result, acquires the confidential development document 1400 shown in Fig. 14 and sends it to the user terminal 101 (Fig. 6: S605 to S606' to S605-YES).

By displaying the confidential development document 1400 on the display unit 104, the control unit 105 that acquired the data functions in the same way as the conventional user terminal (Fig. 6: S610).

In this embodiment, the data table correlates the data ID with the data location, however, it is also possible for the data ID itself to contain location information indicating where the data is stored. In that case, the data ID 'JA9028' shown in Fig. 5B becomes '//aa01SRV/UserB/confidential development document.doc', for example.

Next, the processing by the user on the 'Access-Authorized User' display 701 will be explained. As mentioned above, when the 'Access-Authorized User' display 701 is displayed, the user does not have authorization to access a desired document. In this case, the work flow stops. Therefore, the user uses the input unit 106 to press the button 704 on the second display 703 of the 'Access-Authorized User' display 701.

This button 704 indicates that the user with the name 'Kobayashi' is authorized to change the access authorization. By selecting this button, the selection is received by the access-authorization-change-request unit 114 via the control unit 105 and work-flow-control unit 120 as a request to change the access authorization. After the access-authorization-change-request unit 114 receives the access-authorization-change request, the user 'Kobayashi' is notified of that request by using the messaging function or the like of the work-flow system. When the user Kobayashi' selects 'OK' in response to the request, the request is received by the access-authorization-change-request unit 114, and that access-authorization-change-request unit 114 updates the access-authorization table in the access-authorization-memory unit 111 so that it becomes possible for the user to access the corresponding data.

With the process described above, the work-flow process functions smoothly. Also, changing the access authorization is determined by a person in charge who is set beforehand and who is sufficiently capable of determining whether to change the access authorization, so together with spreading out the human load when changing the access authorization, it is possible to keep security strong.

Also, in response to that display 701, the user uses the input unit 106 to press the button 705 on the first display 702 of the 'Access-Authorized User' display 701.

The button 705 indicates that the user with the name 'Ito' is authorized to perform substitute processing of a process in the work flow of the user that performed the selection. When this display is selected, the selection is received by the substitute-processing-request unit 115 via the control unit 105 as a substitute-processing request. After the substitute-processing-request unit 115 receives the substitute-processing request, the user 'Ito' is notified of that request by similarly using the messaging function. When the user 'Ito' selects 'Approve' in response to that request, 'Unfinished' 826 in the work-flow-status table 820 is updated to 'Finished'. In other words, the response to the substitute-processing request is reflected on the work-flow system, and the work flow advances to the process that is to be performed by the user.

With the process described above, it similarly becomes possible for work-flow processing to function smoothly. Naturally, since security of the materials (documents, data) is not changed, security is sufficiently maintained.

A messaging function was used as an example of a method for notifying another user of an access-authorization-change request or a substitute-processing request, however, the invention is not necessarily limited to this. In other words, the access-authorization-change-request unit 114 and the substitute-processing-request unit 115 can be such that they receive a notification and register a new work flow in the work-flow-information-memory unit 121 for notifying of (carrying out) the request.

Also, in the embodiment described above, a security processing method for attached data was explained in detail, however, this method could also be applied to request contents, or in other words, related data that is referenced by the user when performing a process in the work flow. That is, this security processing method is not limited to attached data, and by performing the same process that was performed for attached data for each record stored in the work-flow table 800, it is possible to effectively strengthen security.

### [Industrial Applicability]

The data-management apparatus, work-flow system and data-management method of this invention, are useful as a data-management apparatus, data-management method and program thereof that make it possible to quickly know who is authorized to access data when a person who does not have access authorization tries to access a document, so they improve convenience for a user that does not have authorization to reference data without sacrificing the security of the data.

## Claims

1. A data-management apparatus (102) that determines whether or not authorization has been given to access data in response to an access request to the data from a user, the apparatus comprising:
an access-authorization-memory unit (111) operable to correlate and store data identifiers that are capable of identifying the data, and access-authorized-user identifiers that are capable of identifying users that can access the data;
an access-analysis unit (107) operable to obtain a user identifier for a user performing an access request and a data identifier for data that is a target of that access from the access request;
an access-authorized-user-acquisition unit (108) operable to obtain an access-authorized-user identifier that correlate to the data identifier obtained by the access-analysis unit within the access-authorization-memory unit;
an access-authorization-judgment unit (109) operable to compare the user identifier obtained by the access-analysis unit with the access-authorized-user identifier obtained by the access-authorized-user-acquisition unit; and
a user-information-provider unit (110) operable to provide information about other users that are authorized to access the data for which the user performed an access request when it was determined by the access-authorization-judgment unit that access of the data is not authorized.

2. The data-management apparatus of claim 1, and wherein
the user-information-provider unit further provides information about another user that is authorized to access data at least whether or not that other user is authorized to change an access authorization for the data, or whether or not that other user is authorized to perform a process in a work flow in place of the user.

3. The data-management apparatus of claim 2 further comprising
an access-authorization-change-request unit (114) operable to, based on information about another user selected by the user, notify said another user corresponding to that information of a request to change the access authorization.

4. The data-management apparatus of claim 3 wherein
the access-authorization-change-request unit changes the access authorization for accessing data based on processing by the other user in response to the request notification.

5. The data-management apparatus of claim 2 further comprising
a substitute-processing-request unit (115) operable to, based on information about another user selected by the user, send a request to another user corresponding to that information to perform a process in the work flow in the place of the user that is supposed to perform the process.

6. The data-management apparatus of claim 1 further comprising:
a work-flow-control unit (120) operable to control a work flow; and
a work-flow-user-memory unit (122) operable to store the work-flow users that are able to use the work flow; and wherein
the work-flow-control unit determines whether or not the work flow can be used independently of whether or not data can be accessed based on the work-flow-user-memory unit.

7. The data-management apparatus of claim 6 wherein, the user-information-provider unit provides information about another user that is authorized to access data at least whether or not that other user is authorized to change an access authorization for the data, or whether or not that other user is authorized to perform a process in the work flow in place of the user.

8. The data-management apparatus of claim 7 further comprising an access-authorization-change-request unit (114) operable to, based on information about another user selected by the user, notify another user corresponding to that information of a request to change the access authorization.

9. The data-management apparatus of claim 8 wherein the access-authorization-change-request unit changes the access authorization for accessing data based on processing by the other user in response to the request notification.

10. The data-management apparatus of claim 7 further comprising a substitute-processing-request unit (115) operable to, based on information about another user selected by the user, send a request to another user corresponding to that information to perform a process in the work flow in the place of the user that is supposed to perform the process.

11. A data-management method that determines whether or not authorization has been given to access data in response to an access request to the data from a user, the method comprising:
an access-analysis step of obtaining a user identifier for a user performing an access request and a data identifier for data that is a target of that access from the access request;
an access-authorized-user-acquisition step that, based on a data identifier obtained by the access-analysis step, obtains a corresponding access-authorized-user identifier within an access-authorization-memory unit that correlates and stores data identifiers that are capable of identifying the data, and access-authorized-user identifiers that are capable of identifying users that can access the data;
an access-authorization-judgment step that compares the user identifier obtained by the access-analysis step with the access-authorized-user identifier obtained by the access-authorized-user-acquisition step; and
a user-information-provision step that provides information about other users that are authorized to access the data for which the user performed an access request when it was determined by the access-authorization-judgment step that access of the data is not authorized.

12. A computer program or suite of computer programs so arranged such that when executed by a computer it/they cause the computer to perform the method of claim 11.

13. A computer readable storage medium storing a computer program or at least one of a suite of computer programs according to claim 12.
